# EUROPEAN PATENT APPLICATION

(11) **EP 4 685 899 A1**
(43) Date of publication of application: **28.01.2026**
(21) Application number: 25752355.5
(22) Date of filing: 05.02.2025
(51) Int. Cl.: H01M 10/04, H01M 4/04, H01M 10/058, H01M 10/52

(54) **IN-LINE MANUFACTURING FACILITY FOR SECONDARY BATTERY**

(30) Priority: 07.02.2024 KR 20240019199
(71) Applicant: LG Energy Solution, Ltd., Seoul 07335 (KR)
(72) Inventor: MOON, Hyun Woo, Daejeon 34122 (KR); LEE, Jun Hee, Daejeon 34122 (KR); KWON, Dae Hyeoung, Daejeon 34122 (KR); LEE, Ju Tae, Daejeon 34122 (KR); KIM, Jae Ha, Daejeon 34122 (KR); CHOI, Kwan Ho, Daejeon 34122 (KR)
(74) Representative: Goddar, Heinz J.
(86) International application number: PCT/KR2025/001690
(87) International publication number: WO 2025/170310

(57) **Abstract**

An in-line manufacturing facility for secondary batteries related to one example of the present invention comprises multiple facilities arranged for manufacturing secondary batteries, and a docking part including a pair of docking members each mounted on two facilities adjacent to each other and having at least one mark displayed on a contact portion, wherein the pair of docking members is arranged so that the mark has a predetermined shape when two facilities adjacent to each other are assembled at a normal position having predetermined flatness and parallelism.

## Description

### Technical Field

The present invention relates to an in-line manufacturing facility for secondary batteries, and more specifically, relates to an in-line manufacturing facility for secondary batteries capable of in-line connecting two facilities adjacent to each other to have predetermined flatness and parallelism.

This application claims the benefit of priority based on Korean Patent Application No. 10-2024-0019199 dated February 7, 2024, and Korean Patent Application No. 10-2025-0014259 dated February 5, 2025, the disclosures of which are incorporated herein by reference in their entirety.

### Background Art

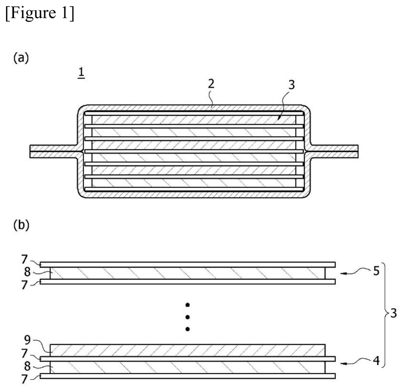

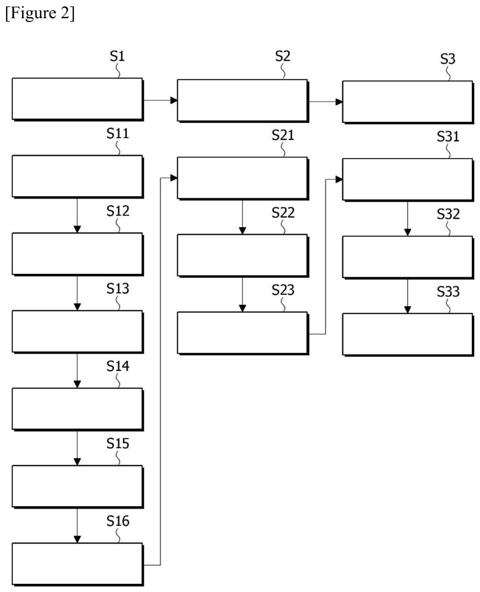

Figure 1 is a configuration diagram of a secondary battery, and Figure 2 is a diagram for explaining a manufacturing process of a secondary battery.

Referring to Figure 1, the secondary battery (1) comprises an electrode assembly (3), an electrolyte (not shown), and a battery case (2). The electrode assembly (3) is one obtained by sequentially laminating a negative electrode (8) and a positive electrode (9) via a separator (7), which is arranged for performing charging and discharging of the secondary battery (1).

The electrolyte (not shown) acts as a medium so that lithium ions can move between the positive electrode (9) and the negative electrode (8) upon charging and discharging of the secondary battery (1), and uses a material with high ion conductivity. The separator (7) has a role of physically blocking the positive electrode (9) and the negative electrode (8) and is arranged so that only ions move.

The battery case (2) is a case in which the electrode assembly (3) and the electrolyte (not shown) are accommodated. The battery case (2) is sealed by a heat fusion method after accommodation of the electrode assembly (3) and the electrolyte (not shown), thereby sealing the electrode assembly (3) and the electrolyte (not shown) in the internal space of the battery case (2).

Referring to Figure 2, the manufacturing process of the secondary battery (1) is a process for manufacturing the secondary battery (1), which comprises an electrode process (S1), an assembly process (S2), and a formation process (S3).

The electrode process (S1), the assembly process (S2), and the formation process (S3) are performed sequentially.

The electrode process (S11) is a process for making an electrode base material, wherein the electrode process (S11) comprises a mixing process, a coating process, a drying process, a pressing process, a slitting process, and a notching process.

Each process of the electrode process is performed in a separate facility. If the flatness and parallelism between the respective facilities performing the electrode process are not correct, meandering of the base material during running the respective processes in a roll-to-roll manner can occur.

The meandering of the base material can cause coating defects in the coating process, slitting defects occurring while un-patterned portions arranged on both sides of a coating layer are cut at different intervals in the slitting process, and cutting defects occurring while lead tabs and notching grooves are not cut in normal positions in the notching process.

The assembly process (S2) is a process of manufacturing a secondary battery (1) comprising an electrode assembly (3), an electrolyte (not shown), and a battery case (2). The assembly process comprises a laminating process, a stacking process, and a packaging process.

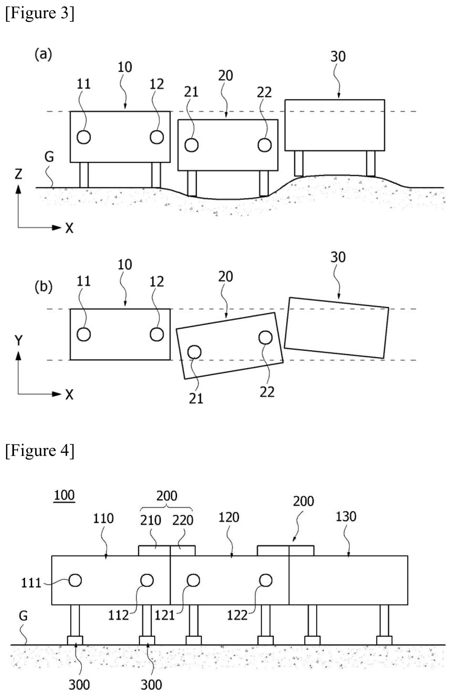

Figure 3 is an arrangement state diagram of multiple facilities for performing a secondary battery manufacturing process, which is a drawing for explaining problems occurring when multiple facilities are not disposed in normal positions.

As one example, referring to Figure 3, a state where a laminating facility (10), a stacking facility (20), and a packaging facility (30) are connected in-line is illustrated.

The laminating facility (10) is a facility for manufacturing mono-cells (4) and half-cells (5) by alternately laminating electrodes and separators.

The electrode assembly (3) is produced in the stacking facility (20).

In addition, the packaging facility (30) is a device for accommodating the electrode assembly (3) in the battery case (2), injecting an electrolyte (not shown), and sealing the battery case (2) by heat fusion.

The laminating facility (10), the stacking facility (20), and the packaging facility (30) are manufactured in advance at a factory so that the preset flatness and parallelism are met. The laminating facility (10), the stacking facility (20), and the packaging facility (30) are transported to sites where the relevant processes are performed in a state separated from each other, and are assembled in-line at the relevant sites according to installation manuals.

When the laminating facility (10), the stacking facility (20), and the packaging facility (30) are connected in-line according to the installation manuals, works of adjusting the flatness and parallelism between two facilities (10 and 20, 20 and 30) adjacent to each other are very important.

Conventionally, design dimensions between the ends of the respective facilities are reflected in the installation manuals, and the relevant facilities are connected in-line according to the installation manuals.

The laminating facility (10), the stacking facility (20), and the packaging facility (30) are connected in-line through a leveling work and a docking work. The leveling work is a work of matching the flatness between the facilities by adjusting a height between two facilities to be connected in-line. The docking work is a work of matching the parallelism between two facilities to be connected in-line.

Workers individually measured heights of two facilities (10 and 20, or 20 and 30) adjacent to each other to the ground according to the installation manuals, calculated the height difference between the two facilities adjacent to each other, and then performed the work of matching the flatness of the two facilities adjacent to each other.

In addition, the workers measured lengths and widths of the two facilities adjacent to each other, respectively, according to the installation manuals to calculate a twisted interval between the two facilities adjacent to each other, and then performed the work of matching the parallelism between the two facilities adjacent to each other.

However, despite such installation manuals, measurement errors occurred depending on the workers when measuring the intervals between the ends, and the heights of the respective facilities, whereby it was difficult to match the parallelism and flatness between the facilities.

For example, as shown in Figure 3(a), when the ground (G) is not flat, height differences can occur among the laminating facility (10), the stacking facility (20), and the packaging facility (30), which are redisposed at the relevant sites.

In addition, as shown in Figure 3(b), misalignment can occur among the facilities during a process in which the laminating facility (10), the stacking facility (20), and the packaging facility (30) are redisposed.

The laminating facility (10) comprises a first roll (11) and a second roll (12). The first roll (11) is disposed on the inlet side where electrodes enter. The second roll (12) is disposed on the outlet side where the mono-cells (4) are discharged. The electrodes are manufactured into mono-cells (4) while moving from the first roll (11) toward the second roll (12). The mono-cells (4) discharged from the second roll (12) are transmitted to a third roll (21) of the stacking facility (20). In addition, the electrode assembly (30) on which stacking is completed can be discharged from the stacking facility (20) through a fourth roll (22).

For example, as shown in Figures 3(a) and 3(b), when there is the height difference and misalignment between the laminating facility (10) and the stacking facility (20), the mono-cells (4) discharged from the second roll (12) of the laminating facility (10) are laminated in a state where the mono-cells (4) are not aligned upon entering the third roll (21) of the stacking facility (20), as the stacking process is performed at a position deviated from the normal position, whereby it is possible to cause an assembly defect of the electrode assembly (3).

### Disclosure

### Technical Problem

The present invention has been devised to solve the problems as above, which is intended to provide an in-line manufacturing facility for secondary batteries capable of in-line connecting two facilities adjacent to each other to have preset flatness and parallelism.

In addition, it is intended to provide an in-line manufacturing facility for secondary batteries capable of precisely and easily in-line connecting two facilities adjacent to each other by connecting a pair of docking members so that marks arranged across a pair of docking members have a predetermined shape.

### Technical Solution

An in-line manufacturing facility for secondary batteries related to one example of the present invention comprises multiple facilities arranged for manufacturing secondary batteries, and a docking part including a pair of docking members each mounted on two facilities adjacent to each other and having at least one mark displayed on a contact portion.

Each facility may be a facility arranged to perform one, or two or more processes upon manufacturing secondary batteries.

The docking part may be provided in one or multiple parts on two facilities adjacent to each other. When the multiple docking parts are provided, two adjacent docking parts may be arranged to be spaced apart by a predetermined interval. The pair of docking members may be docked, and may have one or multiple contact portions upon docking. In addition, the pair of docking members may be inserted into each other and may be in contact with each other to be detachable.

The pair of docking members may be arranged so that the mark has a predetermined shape when two facilities adjacent to each other are assembled at a normal position having predetermined flatness and parallelism. The mark may be provided in one or multiple marks on the pair of docking members.

Also, each of the facilities may comprise an entry roll and a discharge roll. Each of the facilities may have a transfer part including an entry roll and a discharge roll. In addition, the two facilities adjacent to each other may be connected upon assembly at a normal position so that the discharge roll of a first facility performing a preceding process and the entry roll of a second facility performing a subsequent process adjacent thereto have the flatness and the parallelism.

As one example, the first facility may be a laminating facility and the second facility may be a stacking facility.

Also, the pair of docking members may comprise a first docking member having a docking protrusion and a first marking surface on which a part of the mark is displayed, and mounted on the first facility, and a second docking member having a docking groove into which the docking protrusion is inserted and a second marking surface on which the remaining part of the mark is displayed, and mounted on the second facility. The mark may be provided across the first marking surface and the second marking surface. As one example, a certain part of the mark may be displayed on the first marking surface, and the remaining part may be displayed on the second marking surface. As one example, the mark may have a predetermined shape as a single straight line, and when the first facility and the second facility are assembled in the normal position, the mark may be a single straight line, and when the first facility and the second facility are not assembled in the normal position, the mark may not have a predetermined single straight-line shape.

In addition, when the docking protrusion is inserted into the docking groove, the docking protrusion and the docking groove may be arranged to be contactable at a plurality of points.

Furthermore, at least one mark may be displayed on the first and second marking surfaces to have a predetermined shape at a contact portion where the docking protrusion and the docking groove come into contact.

Also, a plurality of marks may be arranged on the pair of docking members, and two marks among the plurality of marks may have the same or different shapes and may be displayed without overlapping with each other.

In addition, two marks among the plurality of marks may be arranged to be symmetrical based on a virtual center line connecting the centers of the docking protrusion and the docking groove.

Furthermore, at least two contact portions may be arranged to be symmetrical based on a virtual center line connecting the centers of the docking protrusion and the docking groove. In addition, the two marks may be arranged to have a predetermined shape at contact portion which are symmetrical based on the virtual center line.

Also, one mark among the plurality of marks may be a first mark displayed on the first and second marking surfaces along the virtual center line.

In addition, one mark among the plurality of marks may be a second mark having a line shape displayed to be not parallel or orthogonal to the virtual center line.

Furthermore, one mark among the plurality of marks may be a third mark in which a plurality of lines is displayed to intersect at a contact portion.

Also, one mark among the plurality of marks may be a fourth mark arranged to pass through multiple contact portions.

In addition, each of the facilities may be provided with a plurality of mounts arranged to adjust a height at each installation point along the height direction with respect to the ground.

Furthermore, the multiple facilities may comprise two or more facilities of a mixing facility, a coating facility, a drying facility, a pressing facility, a slitting facility, and a notching facility, for performing a secondary battery electrode process.

In addition, the multiple facilities may comprise two or more facilities of a lamination facility for manufacturing unit cells comprising separators and electrodes, a stack facility for manufacturing an electrode assembly by laminating the unit cells in units of cells, and a packaging facility for manufacturing a secondary battery in which the electrode assembly and an electrolyte are accommodated.

### Advantageous Effects

As discussed above, the in-line manufacturing facility for secondary batteries related to at least one example of the present invention has the following effects.

By mounting a pair of docking members having a mark displayed on two facilities adjacent to each other, respectively, at normal positions, and connecting the pair of docking members upon assembling the two facilities adjacent to each other so that the mark has a predetermined shape, it is possible to connect the two facilities adjacent to each other in-line.

Upon assembling the two facilities adjacent to each other, the height difference, and the degree of misalignment between the two facilities adjacent to each other can be visually confirmed through the pair of docking members having a mark displayed, and it is possible to improve assembly efficiency and assembly accuracy of the two facilities adjacent to each other.

By connecting the pair of docking members upon assembling two facilities adjacent to each other so that the mark has a predetermined shape, it is possible to connect the two facilities adjacent to each other in-line at a normal position with flatness and parallelism.

Workers can know a height difference between facilities by measuring the step between the first and second marking surfaces of the pair of docking members using a measuring tool without measuring the heights of the facilities and the interval between the facilities, and know the degree of misalignment of the facilities by visually checking whether the mark has a predetermined shape.

Also, the height difference between the pair of docking members can be measured in mm units, and the flatness between the two facilities adjacent to each other can be precisely adjusted.

In addition, the parallelism between the two facilities adjacent to each other can be adjusted by a method of aligning the mark indicated on the pair of docking members to a predetermined shape, whereby it is possible to eliminate work errors due to the skill of the workers.

Furthermore, the flatness and parallelism between multiple facilities can be precisely and accurately adjusted, so that by minimizing assembly errors between multiple facilities, it is possible to improve process efficiency and product productivity.

### Description of Drawings

Figure 1 is a configuration diagram of a secondary battery.
Figure 2 is a diagram for explaining a manufacturing process of a secondary battery.
Figure 3 is an arrangement state diagram of multiple facilities for performing a secondary battery manufacturing process.
Figure 4 is a combined state diagram of an in-line manufacturing facility for secondary batteries according to one example of the present invention.
Figure 5 is a configuration state diagram among multiple facilities according to one example, and Figure 6 is a configuration state diagram among multiple facilities according to another example.
Figure 7 is an installation state diagram in which a docking part according to one example of the present invention is mounted on two facilities adjacent to each other.
Figure 8 is a diagram for explaining a coupling structure of a pair of docking members according to one example of the present invention.
Figures 9 and 10 are diagrams for explaining examples of marks displayed on marking surfaces of a pair of docking members according to one example of the present invention.
Figure 11 is a diagram for explaining a structure of a mount mounted on a bottom of a facility according to one example of the present invention.
Figures 12 and 13 are diagrams for explaining a process for in-line connecting two facilities adjacent to each other.

### Mode for Invention

Hereinafter, with reference to the attached drawings, an in-line manufacturing facility for secondary batteries according to one example of the present invention will be described.

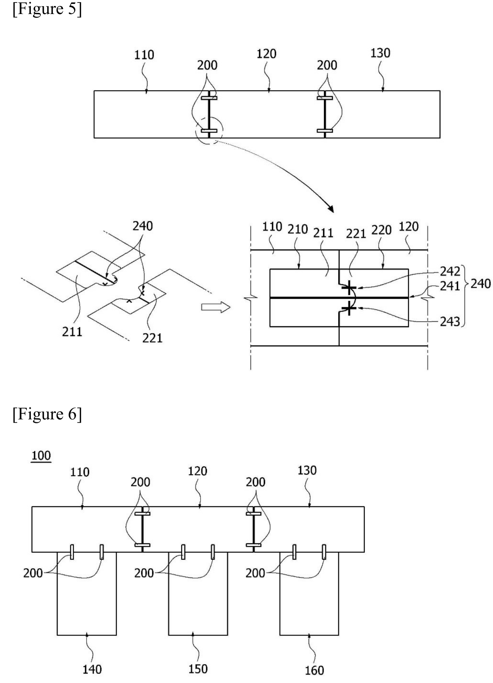

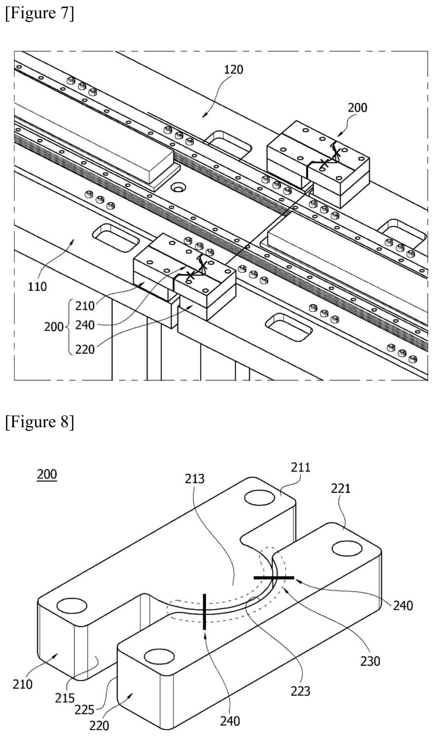

Figure 4 is a combined state diagram of an in-line manufacturing facility for secondary batteries according to one example of the present invention, Figure 5 is a configuration state diagram among multiple facilities according to one example, Figure 6 is a configuration state diagram among multiple facilities according to another example, Figure 7 is an installation state diagram in which a docking part according to one example of the present invention is mounted on two facilities adjacent to each other, and Figure 8 is a diagram for explaining a coupling structure of a pair of docking members according to one example of the present invention.

As illustrated in Figures 4 to 6, an in-line manufacturing facility (100) for secondary batteries related to one example of the present invention comprises multiple facilities (110, 120, 130, 140, 150, 160) arranged for manufacturing secondary batteries. The multiple facilities (110, 120, 130, 140, 150, 160) will be described below.

In addition, the in-line manufacturing facility (100) for secondary batteries comprises a docking part (200) including a pair of docking members (210, 220) each mounted on two facilities adjacent to each other (110, 120) and having at least one mark (240) displayed on a contact portion. The manufacturing facility (100) may comprise at least one docking part

(200), and two facilities adjacent to each other may be provided with a plurality of docking parts (200).

Upon assembling the two facilities adjacent to each other (110, 120), the pair of docking members (210, 220) may be docked so that the mark (240) has a predetermined shape. As one example, the pair of docking members (210, 220) may have a protrusion and a groove structure into which the protrusion is inserted, and may be in contact at one or more points upon docking. In addition, the pair of docking members (210, 220) may be detachably connected. In this document, the term docking may mean a state where a pair of docking members are in contact with each other at one or more points.

The pair of docking members (210, 220) are arranged so that the mark (240) has a predetermined shape when the two facilities adjacent to each other (110, 120) are assembled at a normal position with preset flatness and parallelism.

In this document, the flatness is related to a leveling operation, which may mean a height difference between two facilities to be connected in-line. As one example, the preset flatness may mean that there is no height difference between two facilities. In addition, the parallelism may mean a misalignment between two facilities adjacent to each other based on the lengths and widths of the two facilities. As one example, the preset parallelism may mean that no misalignment occurs between two facilities.

Upon assembling the two facilities adjacent to each other (110, 120) above, the workers may connect the two facilities adjacent to each other (110, 120) in-line by connecting the pair of docking members (210, 220) so that the mark (240) has a predetermined shape. The predetermined shape of the mark (240) may vary, and may be any one of a first mark (241) to a fourth mark (244) to be described below, or a combination thereof.

For convenience of explanation, the two facilities adjacent to each other (110, 120) are separately referred to as a first facility (110) and a second facility (120).

The first facility (110) is a facility disposed at the front end along the arrangement direction of the facilities. The second facility (120) is a facility disposed at the rear end of the first facility (110). That is, the first facility (110) may be a facility where a preceding process is performed, and the second facility (120) may be a facility where a subsequent process of the preceding process performed in the first facility (110) is performed.

Each facility (110, 120) may have a transfer part comprising an entry roll and a discharge roll. Through the transfer part, two facilities adjacent to each other (110, 120) may be connected in-line in a roll-to-roll manner.

As one example, the first facility (110) has a transfer part comprising a first entry roll (111) and a first discharge roll (112). The second facility (120) has a transfer part comprising a second entry roll (121) and a second discharge roll (122).

For example, the two facilities adjacent to each other (110, 120) may be connected in-line upon assembly at a normal position so that the first discharge roll (112) of the first facility (110) performing a preceding process and the second entry roll (121) of the second facility performing a subsequent process adjacent thereto have the flatness and the parallelism.

Figure 7 is an installation state diagram in which a docking part according to one example of the present invention is mounted on two facilities adjacent to each other, and Figure 8 is a diagram for explaining a coupling structure of a pair of docking members according to one example of the present invention.

Referring to Figures 7 and 8, the pair of docking members (210, 220) comprises a first docking member (210) and a second docking member (220).

The first docking member (210) has a docking protrusion (213) and a first marking surface (211) on which a portion of the mark (240) is displayed. The first docking member (210) may be mounted on the first facility (110) so that the first marking surface (211) is exposed to the outside. The first docking member (210) may be bolting-coupled to the first facility (110).

The docking protrusion (213) may be protruded to be curved at a predetermined curvature. The docking protrusion (213) may be formed by protruding a first contact surface (215) bent from the first marking surface (211).

The second docking member (220) has a docking groove (223) into which the docking protrusion (213) is inserted and a second marking surface (221) on which the remaining portion of the mark (240) is displayed. The second docking member (220) may be mounted on the second facility (120) so that the second marking surface (221) is exposed to the outside. The second docking member (220) may be bolting-coupled to the second facility (120).

The docking groove (223) may be formed by sinking a second contact surface (225) bent from the second marking surface (221) and contactable with the first contact surface (215) at least in a portion of a region.

In addition, the first contact surface (215) and the second contact surface (225) mean surfaces where the first docking member (210) and the second docking member (220) face each other, which may come into contact at one or more points upon docking.

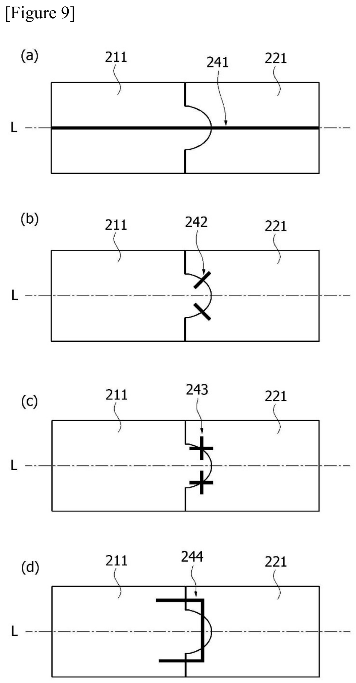

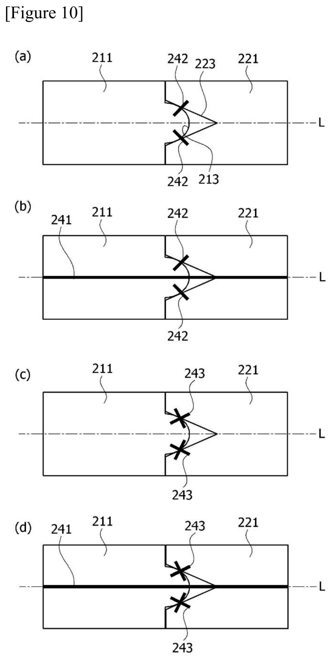

Figures 9 and 10 are diagrams for explaining examples of marks displayed on marking surfaces of a pair of docking members according to one example of the present invention.

Referring to Figures 8 and 9, as one example, the docking groove (223) may have a curvature greater than that of the docking protrusion (213). The docking groove (223) may be arranged to be line-contactable or surface-contactable with at least a portion of the docking protrusion (213). Also, the docking groove (223) may be formed so that the internal space becomes narrower in a direction away from the docking protrusion. In addition, the docking groove (223) may be arranged to be contactable with the docking protrusion (213) at a plurality of points.

As one example, referring to Figure 9, the docking groove (223) may have a semicircular cross-section.

As another example, referring to Figure 10, the docking groove (223) may have a V-shaped cross-section.

The first and second docking members (210, 220) may be mounted on the first and second facilities (110, 120), respectively, so that the mark (240) is exposed to the outside, and the docking protrusion (213) and the docking groove (223) are in contact with each other, and connected so that the mark (240) has a predetermined shape, whereby it is possible to guide the normal-position assembly of the first and second facilities (110, 120).

Referring to Figure 8, the mark (240) is displayed on a contact portion (230) where the docking protrusion (213) and the docking groove (223) come into contact. The mark (240) is displayed together on the first marking surface (211) of the docking protrusion (213) and the second marking surface (221) of the docking groove (223). The mark (240) may be arranged so that the portion displayed on the first marking surface (211) and the portion displayed on the second marking surface (221) have a predetermined specific shape when the two facilities are assembled at the normal position.

The mark (240) may be displayed on each of the first and second marking surfaces (211, 221) at the contact portion (230) where the docking protrusion (213) and the docking groove (223) come into contact.

The mark (240) may be displayed on the contact portion (230) to have a predetermined shape at the normal position on the same plane of the first and second marking surfaces (211, 221).

The at least two marks (240) may have the same shape, and may be arranged at different locations so as not to overlap. In addition, the at least two marks (240) may have different shapes and may be displayed so as not to overlap with each other.

Two marks among the multiple marks may be displayed on contact portions (230), respectively, that are not located on the virtual center line (L).

As one example, two marks among the multiple marks may be arranged to be symmetrical based on the virtual center line (L) connecting the centers of the docking protrusion (210) and the docking groove (220).

Referring to Figure 9(a), the mark (240) may comprise a first mark (241) partially displayed on each of the first and second marking surfaces (211, 221) along the virtual center line (L). The first mark (241) has a predetermined shape of a straight line.

Referring to Figures 9(b) and 10(a), the mark (240) may comprise a second mark (242) having an oblique line displayed to be not parallel or orthogonal to the virtual center line (L).

Referring to Figure 10(b), the second mark (242) may be arranged with two oblique lines at two contact portions, respectively, and the two second marks (242) may be symmetrical along the virtual center line (L), and may be displayed so as not to overlap with the first mark (241).

Referring to Figures 9(c) and 10(c), the at least one mark (240) may comprise a third mark (243) in which multiple lines are displayed to intersect at one point of the contact portion (230).

Referring to Figure 10(d), the third mark (243) may have an X-shaped shape in which two lines intersect, and may be arranged so as not to overlap with the first mark (241). In addition, it may be displayed on each of the multiple contact portions (230).

Referring to Figure 9(d), the mark (240) may comprise a fourth mark (244) displayed on the first and second marking surfaces (211, 221) to pass through a plurality of points of the contact portion (230).

One mark (240) of the multiple marks (240) may be the first mark (241) to the fourth mark (244).

The mark (240) may be provided as a combination of the first mark (241) to the fourth mark (244). In addition, the mark (240) is not limited to those shown in this document, and various forms which are easily recognizable by the workers with the naked eyes may be applied.

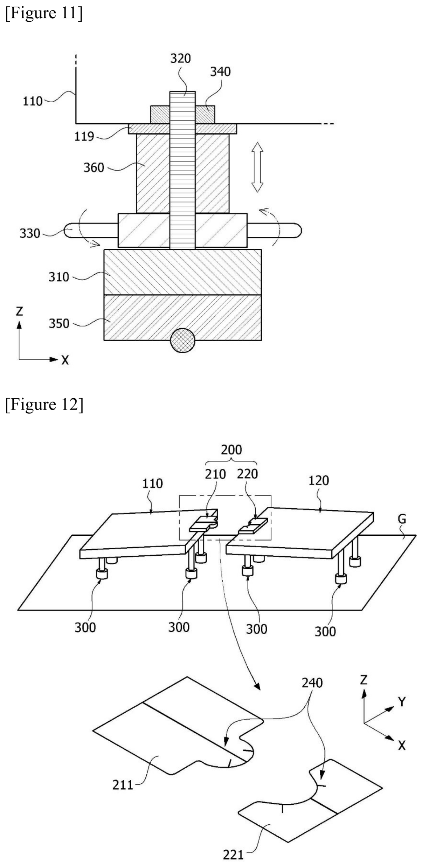

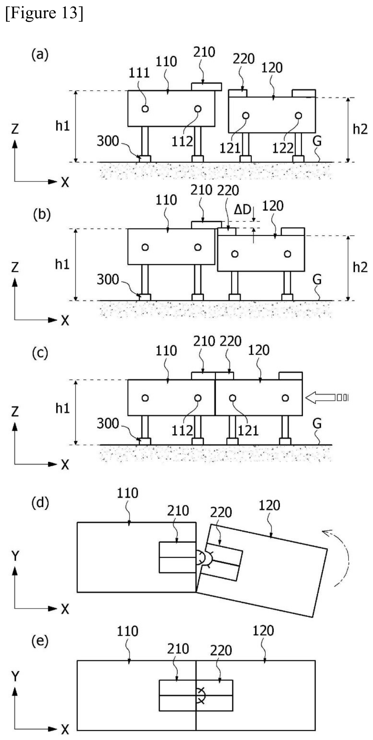

Figure 11 is a diagram for explaining a structure of a mount mounted on a bottom of a facility according to one example of the present invention, and Figures 12 and 13 are diagrams for explaining a process for in-line connecting two facilities adjacent to each other.

Each of the facilities (110, 120, 130, 140, 150, 160) may have a plurality of mounts (300) mounted on the facility bottom (119). The plurality of mounts (300) may be mounted on the facility bottom (119) along the circumferential direction of the facility bottom (119) so that the load of the facility is dispersible to the ground (G).

Referring to Figures 11 and 12, the mount (300) is mounted on the facility bottom (119) and arranged to adjust the height of the facility bottom (119) along the height direction (z) with respect to the ground (G).

The mount (300) comprises a foot base (310) arranged to be capable of being seated on the ground (G), a fixing bolt (320) mounted on the foot base (310) and the facility bottom (119), and a knob (330) mounted on the fixing bolt (320) to adjust the height of the facility bottom (119) with respect to the foot base (310).

The fixing bolt (320) is mounted on the foot base (310) and the facility bottom (119) to be parallel to the height direction (z) perpendicular to the ground (G). The fixing bolt (320) may be mounted on the facility bottom (119) by a nut (340). The nut (340) is bolting-coupled to the fixing bolt (320) to be in contact with the facility bottom (119) in the inside of the facility.

The knob (330) is mounted on the fixing bolt (320) to rotate the fixing bolt (320) in a predetermined direction. The workers may adjust the height of the facility bottom (119) with respect to the foot base (310) through the knob (330).

Also, a ball caster (350) arranged to be capable of idling with respect to the ground (G) may be mounted on the foot base (310) of the mount (300). The ball caster (350) is for rotating the facility at a predetermined angle in a direction parallel to the ground (G).

In addition, a spacer (360) may be detachably mounted on the fixing bolt (320) of the mount (300). The spacer (360) is for limiting the movement of the facility bottom (119). The spacer (360) may be mounted on the mount (300) after adjusting the parallelism and flatness between the first and second facility (110, 120) adjacent to each other.

Furthermore, the spacer (360) may be mounted to match the interval between the foot base (310) of the mount (300) and the facility bottom (119). Depending on the interval between the foot base (310) and the facility bottom (119), a plurality of spacers (360) may be mounted on the fixing bolt (320) of the mount (300).

The first facility (110) and the second facility (120) having the structure as above may be connected in-line by adjusting the position of the second facility (120) to a normal position based on the first facility (110).

Referring to Figures 12 and 13(a), the second facility (120) is positioned so that the docking protrusion (213) of the first docking member (210) is inserted into the docking groove (223) of the second docking member (220).

Referring to Figure 13(b), the worker may measure a step (ΔD) between the first and second docking members (210, 220) using a measuring tool (not shown).

As one example, referring to Figure 13(c), the worker may adjust the height (h2) of the second facility (120) to the height (h1) of the first facility (110) by the step (ΔD) through the mount (300) mounted on the second facility (120). Alternatively, the worker may adjust the height of the first facility (110) by the step (ΔD) through the mount (300) mounted on the first facility (110). The height adjustment targets of the first facility (110) and the second facility (120) may vary according to the installation manuals.

Referring to Figure 13(d), the worker may perform a leveling operation (flatness adjustment) of adjusting the height of the mount (300) mounted on the second facility (120).

The leveling operation is an operation of matching the flatness between the first facility (110) and the second facility (120). The flatness of the first and second facility (110, 120) may be matched when the first and second marking surfaces (211, 221) are located on the same plane.

Referring to Figure 13(e), the worker may adjust the parallelism of the second facility (120) so that the mark (240) displayed on the first and second marking surfaces (211, 221) has a predetermined shape.

The worker may adjust the position of the second facility (120) so that the mark (240) has a predetermined shape at the contact portion (230) of the first and second docking members (210, 220) by pushing the second facility (120) along a direction parallel to the ground (G) at a predetermined angle. The second facility (120) may be positionally adjusted at a predetermined angle with respect to the ground (G) by the ball caster (350) mounted on each mount (300).

If the second facility (120) is connected in-line to the first facility (110) at the normal position through such processes, the spacer (360) is mounted on each mount (300) mounted on the second facility (120).

In the in-line manufacturing facility (100) for secondary batteries according to the present example, the worker can know the height difference between the facilities by measuring the step (ΔD) between the first and second marking surfaces (211, 221) of the pair of docking members (210, 220) using a measuring tool (not shown) without manually measuring the heights (h1, h2) of the facilities and the interval between the facilities, and can know the degree of misalignment of the facilities by visually checking whether the mark (240) is in a predetermined shape.

In addition, the height difference between the pair of docking members (210, 220) can be measured in mm units, so that it is possible to precisely adjust the flatness between two facilities adjacent to each other.

The worker can easily determine the height difference and degree of misalignment between two facilities adjacent to each other (110 and 120) through the mark (240) displayed on the pair of docking members (210, 220) without directly measuring the heights and interval of the two facilities adjacent to each other (110 and 120).

Also, the worker can check the height difference between the two facilities adjacent to each other (110 and 120) through the height difference between the first marking surface (211) and the second marking surface (221) of the pair of docking members (210, 220).

In addition, the worker can check the degree of misalignment between the two facilities adjacent to each other (110 and 120) through the mark (240) displayed on the first marking surface (211) and the second marking surface (221). As one example, the worker can adjust the parallelism between two facilities adjacent to each other by combining the pair of docking members (210, 220) so that the mark (240) becomes a predetermined shape. Accordingly, it is possible to minimize measurement errors due to the worker upon assembling two facilities adjacent to each other (110, 120).

The in-line manufacturing facility (100) for secondary batteries according to the present example can precisely and accurately adjust the flatness and parallelism between multiple facilities (110, 120, 130, 140, 150, 160) in such a manner, thereby minimizing assembly errors between the multiple facilities (110, 120, 130, 140, 150, 160), so that it is possible to improve process efficiency and product productivity.

Hereinafter, the multiple facilities (110, 120, 130, 140, 150, 160) will be described.

The multiple facilities (110, 120, 130, 140, 150, 160) may also be disposed in a row, as shown in Figure 5, depending on the arrangement structure (arrangement direction, arrangement order, etc.) between the facilities. Alternatively, the multiple facilities (110, 120, 130, 140, 150, 160) may also be disposed, as shown in Figure 6, depending on the arrangement structure between the facilities.

Referring to Figures 4 and 5, the multiple facilities (110, 120, 130) may comprise first to third facilities (110, 120, 130) disposed in a row. The first facility (110) and the second facility (120) may be connected in-line by the first docking member (210) mounted at the rear end of the first facility (110) and the second docking member (220) disposed at the front end of the second facility (120).

In addition, the second facility (120) and the third facility (130) may be connected in-line by the first docking member mounted at the rear end of the second facility (120) and the second docking member disposed at the front end of the third facility (130).

Referring to Figure 6, the multiple facilities (110, 120, 130, 140, 150, 160) may comprise first to third facilities (130) disposed in a row, a fourth facility (140) disposed on the side of the first facility (110), a fifth facility (150) disposed on the side of the second facility (120), and a sixth facility (160) disposed on the side of the third facility (130). The plurality of docking parts (200) may be mounted at multiple points of the first facility (110) to the sixth facility (160) so that the first facility (110) to the sixth facility (160) are connected in-line at the normal positions.

The docking part (200) may be mounted at a point where two facilities adjacent to each other are connected, depending on the connection structure between the multiple facilities (110, 120, 130, 140, 150, 160).

In the present example, for convenience of explanation, the installation locations of the first docking member (210) and the second docking member (220) are described as being mounted at the front or rear end of the facility, but this is only for convenience of explanation, and the installation locations of the first and second docking members (210, 220) may vary depending on the connection structure between the facilities.

Referring to Figures 2, 5, and 6, the multiple facilities (110, 120, 130, 140, 150, 160) may comprise a mixing facility (S11), a coating facility (S12), a drying facility (S13), a pressing facility (S14), a slitting facility (S15), and a notching facility (S15), which perform each sub-process in relation to the electrode process (S11).

As one example, the mixing facility (S11), the coating facility (S12), the drying facility (S13), the pressing facility (S14), the slitting facility (S15), and the notching facility (S15) may be connected in-line by the respective docking parts mounted at different points along the arrangement direction of the facilities.

Also, the multiple facilities (110, 120, 130, 140, 150, 160) may comprise a laminating facility (S21), a stacking facility (S22), and a packaging facility (S23), which perform each sub-process in relation to the assembly process (S2).

In addition, the multiple facilities (110, 120, 130, 140, 150, 160) may comprise an activation facility (S31), an aging facility (S32), and a degassing facility (S33), which perform each sub-process in relation to the formation process (S3).

As one example, referring to Figures 1, 2, and 5, the lamination facility (S21, 110) is a facility for manufacturing unit cells such as mono-cells (4) or half-cells (5) in which negative electrodes (8)/positive electrodes (9) and separators (7) are laminated. The mono-cell (4) may be one obtained by laminating a separator (7), a negative electrode (8), a separator (7), and a positive electrode (9) sequentially, and the half-cell may be one obtained by laminating a separator (7), a negative electrode (8), and a separator (7) sequentially.

The stacking facility (S22, 120) may be a facility for manufacturing an electrode assembly (3) by laminating a plurality of unit cells.

In addition, the packaging facility (S23, 130) may be a facility for manufacturing the secondary battery (1) by accommodating the electrode assembly (3) in the battery case (2), injecting an electrolyte (not shown), and sealing the battery case (2) by heat fusion.

In this way, in the assembly process (S2), the lamination facility (110), the stacking facility (120), and the packaging facility (130) may be connected in-line by the respective docking parts along the arrangement direction of the facilities.

As the lamination facility, the stacking facility, and the packaging facility are connected in-line, the unit cells manufactured in the lamination facility can be transported and laminated to the normal position of the stacking facility, thereby preventing alignment failure of the electrode assembly.

In addition, the electrode assembly manufactured in the stacking facility can be transported to the normal position of the packaging facility, thereby preventing assembly failure of the secondary battery.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the in-line manufacturing facility for secondary batteries related to one example of the present invention, two facilities adjacent to each other can be connected in-line to have predetermined flatness and parallelism.

## Claims

1. An in-line manufacturing facility for secondary batteries comprising:
multiple facilities arranged for manufacturing secondary batteries; and
a docking part including a pair of docking members each mounted on two facilities adjacent to each other and having at least one mark displayed on a contact portion, wherein
the pair of docking members is arranged so that the mark has a predetermined shape when two facilities adjacent to each other are assembled at a normal position having predetermined flatness and parallelism.

2. The in-line manufacturing facility for secondary batteries according to claim 1, wherein
each of the facilities comprises an entry roll and a discharge roll, and
the two facilities adjacent to each other are connected upon assembly at a normal position so that the discharge roll of a first facility performing a preceding process and the entry roll of a second facility performing a subsequent process adjacent thereto have the flatness and the parallelism.

3. The in-line manufacturing facility for secondary batteries according to claim 2, wherein
the pair of docking members comprises:
a first docking member having a docking protrusion and a first marking surface on which a part of the mark is displayed, and mounted on the first facility; and
a second docking member having a docking groove into which the docking protrusion is inserted and a second marking surface on which the remaining part of the mark is displayed, and mounted on the second facility.

4. The in-line manufacturing facility for secondary batteries according to claim 3, wherein when the docking protrusion is inserted into the docking groove, the docking protrusion and the docking groove are arranged to be contactable at a plurality of points.

5. The in-line manufacturing facility for secondary batteries according to claim 4, wherein
at least one mark is displayed on the first and second marking surfaces to have a predetermined shape at a contact portion where the docking protrusion and the docking groove come into contact.

6. The in-line manufacturing facility for secondary batteries according to claim 5, wherein
a plurality of marks is arranged on the pair of docking members, and
two marks among the plurality of marks have the same or different shapes and are displayed without overlapping with each other.

7. The in-line manufacturing facility for secondary batteries according to claim 6, wherein
two marks among the plurality of marks are arranged to be symmetrical based on a virtual center line connecting the centers of the docking protrusion and the docking groove.

8. The in-line manufacturing facility for secondary batteries according to claim 7, wherein
at least two contact portions are arranged to be symmetrical based on a virtual center line connecting the centers of the docking protrusion and the docking groove, and
the two marks are arranged to have a predetermined shape at contact portion which are symmetrical based on the virtual center line.

9. The in-line manufacturing facility for secondary batteries according to claim 6, wherein
one mark among the plurality of marks is a first mark displayed on the first and second marking surfaces along the virtual center line.

10. The in-line manufacturing facility for secondary batteries according to claim 6, wherein
one mark among the plurality of marks is a second mark having a line shape displayed to be not parallel or orthogonal to the virtual center line.

11. The in-line manufacturing facility for secondary batteries according to claim 6, wherein
one mark among the plurality of marks is a third mark in which a plurality of lines is displayed to intersect at a contact portion.

12. The in-line manufacturing facility for secondary batteries according to claim 6, wherein
one mark among the plurality of marks is a fourth mark arranged to pass through multiple contact portions.

13. The in-line manufacturing facility for secondary batteries according to claim 1, wherein
each of the facilities is provided with a plurality of mounts arranged to adjust a height at each installation point along the height direction with respect to the ground.

14. The in-line manufacturing facility for secondary batteries according to claim 1, wherein
the multiple facilities comprise two or more facilities of a mixing facility, a coating facility, a drying facility, a pressing facility, a slitting facility, and a notching facility, for performing a secondary battery electrode process.

15. The in-line manufacturing facility for secondary batteries according to claim 1, wherein
the multiple facilities comprise two or more facilities of a lamination facility for manufacturing unit cells comprising separators and electrodes, a stack facility for manufacturing an electrode assembly by laminating the unit cells, and a packaging facility for manufacturing a secondary battery in which the electrode assembly and an electrolyte are accommodated.
